# EUROPÄISCHE PATENTANMELDUNG

(11) **EP 4 013 045 A1**
(43) Veröffentlichungstag der Anmeldung: **15.06.2022**
(21) Anmeldenummer: 21213965.3
(22) Anmeldetag: 13.12.2021
(51) Int. Cl.: H04N 7/18, B60R 1/00, B60R 16/00

(54) **VIDEOSYSTEM ZUR VERTEILUNG VON VIDEODATEN IN EINEM FAHRZEUG**

(30) Priorität: 14.12.2020 DE 102020133370
(71) Anmelder: Krauss-Maffei Wegmann GmbH & Co. KG, 80997 München (DE)
(72) Erfinder: Fischer, Dirk, 80997 München (DE)
(74) Vertreter: Feder Walter Ebert

(57) **Zusammenfassung**

Videosystem (1) zur Verteilung von unkomprimierten Videodaten (10) in einem Fahrzeug (30), insbesondere einem militärischen Fahrzeug, mit mehreren Videoquellen (2) zur Bereitstellung der Videodaten (10) und mit mindestens einer Empfangseinheit (6) zum Empfangen und Verarbeiten der Videodaten (10) innerhalb des Fahrzeugs (30), wobei die Videoquellen (2) über eine Verteilereinheit (4) mit der mindestens einen Empfangseinheit (6) verbunden sind, wobei die unkomprimierten Videodaten (10) der mehreren Videoquellen (2) von der Verteilereinheit (4) aus zu der mindestens einen Empfangseinheit (6) über einen gemeinsamen Lichtwellenleiter (5) als serieller Datenframe (17) übertragbar sind.

## Beschreibung

Die Erfindung betrifft ein Videosystem zur Verteilung von unkomprimierten Videodaten in einem Fahrzeug, insbesondere einem militärischen Fahrzeug, mit mehreren Videoquellen zur Bereitstellung der Videodaten und mit mindestens einer Empfangseinheit zum Empfangen und Verarbeiten der Videodaten innerhalb des Fahrzeugs, wobei die Videoquellen über eine Verteilereinheit mit der mindestens einen Empfangseinheit verbunden sind. Ferner betrifft die Erfindung ein Fahrzeug mit einem solchen Videosystem sowie ein Verfahren zur Verteilung von unkomprimierten Videodaten in einem Fahrzeug.

Videosysteme zur Verteilung von Videodaten in einem Fahrzeug sind aus dem Stand der Technik für unterschiedliche Fahrzeugarten bekannt. Insbesondere im militärischen Bereich sind Fahrzeuge, wie beispielsweise Panzer, mit Videosystemen ausgestattet, um außerhalb des Fahrzeugs aufgenommene Videodaten innerhalb des Fahrzeugs zu verteilen.

Bekannte Videosysteme weisen mehrere Videoquellen zur Bereitstellung der Videodaten auf. Die Videoquellen können hierbei bspw. Kameras, Bildsensoren oder Computer sein, welche die Videodaten entsprechend aufnehmen und/oder generieren.

Zum Empfangen und Verarbeiten der Videodaten innerhalb des Fahrzeugs weisen die Videosysteme ferner mindestens eine Empfangseinheit auf, welche die Videodaten empfangen kann, so dass diese anschließend, beispielsweise auf einem an die Empfangseinheit angeschlossenen Monitor als Anzeigeeinheit, angezeigt werden können. Die über die Empfangseinheit empfangenen Videodaten können beispielsweise einem Besatzungsmitglied bereitgestellt werden.

Um die Videodaten von den Videoquellen aus zu der Empfangseinheit zu übertragen, sind die Videoquellen mit der Empfangseinheit über eine Verteilereinheit verbunden. Die Verteilereinheit ermöglicht das Verteilen der Videodaten, indem diese die Videodaten von mehreren Videoquellen empfängt und anschließend über Verbindungskabel zu der Empfangseinheit übermittelt.

Obschon sich derartige Videosysteme für eine Vielzahl von Anwendungen zur Verteilung von Videodaten innerhalb eines Fahrzeugs eignen, so ergeben sich für spezielle Einsatzzwecke auch Nachteile.

Beispielsweise müssen die Videodaten bei Videosystemen zur Anwendung im militärischen Bereich, wie etwa in militärischen Fahrzeugen, latenzarm, also ohne wesentliche zeitliche Verzögerung, innerhalb des Fahrzeugs verteilt werden. Dies wird dadurch ermöglicht, dass die Videodaten in unkomprimierter Form, also als Rohdaten, im Fahrzeug verteilt werden. Eine zeitliche Verzögerung aufgrund eines Komprimierungsschrittes der Videodaten entfällt entsprechend bei derartigen Systemen.

Eine Verteilung der unkomprimierten Videodaten setzt jedoch gleichzeitig eine entsprechend hohe Bandbreite voraus, da größere Videodaten zur Verteilung im Fahrzeug übertragen werden müssen. Aus diesem Grund verbindet je Videoquelle mindestens ein Verbindungskabel die Verteilereinheit mit der mindestens einen Empfangseinheit, wodurch die unkomprimierten Videodaten gesondert über das jeweilige Verbindungskabel übertragbar sind und eine entsprechend hohe Bandbreite zur Verfügung gestellt wird.

Mit steigender Anzahl an Videoquellen, welche bei militärischen Fahrzeugen insbesondere sinnvoll sind, um eine Rundumsicht des Fahrzeugs zu ermöglichen, und insbesondere mit steigender Anzahl an Empfangseinheiten, welche die Videodaten an unterschiedlichen Stellen im Fahrzeug zur Verfügung stellen können, ergeben sich hierdurch jedoch ausgesprochen aufwendige Verkabelungen. Sollen beispielsweise Videodaten von sechs Videoquellen an drei Empfangseinheiten verteilt werden, so wären insgesamt achtzehn Verbindungskabel notwendig, um die erforderliche Bandbreite zur latenzarmen Verteilung der Videodaten im Fahrzeug zu ermöglichen.

Bei militärischen Fahrzeugen, wie Panzern, die eine Fahrzeugwanne und einen gegenüber der Fahrzeugwanne drehbaren Fahrzeugturm aufweisen, kommt erschwerend hinzu, dass die Videodaten auch über mehrere separate Schleifringe zwischen Fahrzeugwanne und Fahrzeugturm übertragen werden müssen. Da die Anzahl an Schleifringen jedoch begrenzt ist, ist gleichzeitig die Anzahl an Videoquellen sowie Empfangseinheiten bei den aus dem Stand der Technik bekannten Lösungen begrenzt.

Es ergibt sich insofern nachteilig, dass die Anzahl an Videoquellen und insbesondere auch Empfangseinheiten bei bekannten Videosystemen für einige Anwendungsfälle, insbesondere bei solchen, die eine latenzarme Verteilung der unkomprimierten Videodaten fordern, maßgeblich aufgrund der zunehmend komplexeren Verkabelung begrenzt sind.

Der vorliegenden Erfindung liegt daher die **Aufgabe** zugrunde, ein Videosystem zu schaffen, bei welchem eine latenzarme Verteilung von unkomprimierten Videodaten durch weniger aufwendige Verbindungsleitungen ermöglicht wird.

Zur **Lösung** dieser Aufgabe wird bei einem Videosystem der vorstehend genannten Art vorgeschlagen, dass die unkomprimierten Videodaten der mehreren Videoquellen von der Verteilereinheit aus zu der mindestens einen Empfangseinheit über einen gemeinsamen Lichtwellenleiter als serieller Datenframe übertragbar sind.

Durch die Übertragung der unkomprimierten Videodaten als serieller Datenframe über einen gemeinsamen Lichtwellenleiter kann eine aufwendige Verkabelung zwischen der Verteilereinheit und der Empfangseinheit bei mehreren Videoquellen vermieden werden. Während bei Videosystemen des Stands der Technik je Videoquelle und je Empfangseinheit jeweils ein Kabel erforderlich ist, wodurch bei einer Vielzahl an Videoquellen und Empfangseinheiten sich aufwendige Verkabelungen ergeben, ist bei dem erfindungsgemäßen Videosystem nur ein Lichtwellenleiter je Empfangseinheit erforderlich. Durch die Übertragung der Videodaten über einen Lichtwellenleiter als serieller Datenframe wird zudem eine latenzarme Übertragung der Videodaten ermöglicht, so dass die von den Videoquellen aufgenommenen und/oder generierten Videodaten im Wesentlichen ohne zeitlichen Versatz an die Empfangseinheit übertragbar sind. Hierdurch können die unkomprimierten Videodaten einem Besatzungsmitglied ohne Latenzen zur Verfügung gestellt werden. Eine Komprimierung der Videodaten, welche unter Umständen zu Latenzen führen könnte, ist bei dem Videosystem nicht erforderlich, da durch den Lichtwellenleiter ausreichend Bandbreite zur Übertragung der unkomprimierten Videodaten als serieller Datenframe verfügbar ist. Die unkomprimierten Videodaten werden als Rohdaten von den Videoquellen bereitgestellt.

Eine vorteilhafte Weiterbildung der Erfindung sieht vor, dass die Verteilereinheit eine Serialisierungseinheit zum Serialisieren der Videodaten der mehreren Videoquellen zu einem seriellen Datenframe aufweist. Hierdurch lassen sich die Videodaten zu einem seriellen Datenframe serialisieren, um die unkomprimierten Videodaten mehrerer Videoquellen über einen gemeinsamen Lichtwellenleiter zu übertragen. Der serielle Datenframe kann über den gemeinsamen Lichtwellenleiter latenzarm übertragen werden. Die Videodaten sind unkomprimiert als serieller Datenframe übertragbar. Durch die Übertragung von unkomprimierten Rohdaten entfällt die Komprimierung der Videodaten, welche bei bekannten Übertragungsverfahren zu Latenzen führt.

Vorteilhafterweise ist die Verteilereinheit als Leiterkarte ausgestaltet. Hierdurch ist es möglich, die Verteilereinheit besonders kompakt auszugestalten. Die als Leiterkarte ausgestaltete Verteilereinheit kann dabei als Sendeeinheit fungieren.

Vorteilhafterweise sind die Videodaten als elektrische Signale von der Verteilereinheit empfangbar und/oder als optische Signale von der Verteilereinheit aus über den Lichtwellenleiter verteilbar. Die Verteilereinheit kann die als elektrische Signale empfangenden Videodaten in optische Signale umwandeln.

Vorteilhafterweise weist die Verteilereinheit mehrere Receiver zum Empfangen der Videodaten der mehreren Videoquellen auf. Über die Receiver ist es möglich, dass sich unterschiedliche Videoquellen an die Verteilereinheit anschließen lassen. Die Anzahl an Receivern kann der Anzahl der Videoquellen entsprechen. Es ist möglich, dass die Receiver Videofarbinformationen, Pixeltakte, horizontale Synchronisierungssignale, vertikale Synchronisierungssignale und/oder Gültigkeitssignale der Videodaten empfangen. Die Receiver können die empfangenden Videodaten, insbesondere die Videofarbinformationen, Pixeltakte, horizontale Synchronisierungssignale, vertikale Synchronisierungssignale und/oder Gültigkeitssignale der Videodaten, als digitale Daten zur weiteren Verarbeitung zur Verfügung stellen. Es ist möglich, dass der Receiver die Videodaten als digitales Signal, insbesondere als elektrisches Signal, empfängt und/oder als digitales Signal, insbesondere als elektrisches Signal, weiterleitet.

Es hat sich darüber hinaus bewährt, wenn die Verteilereinheit mehrere Adaptionseinheiten zur Konvertierung der Videodaten der mehreren Videoquellen in einen einheitlichen Farbraum aufweist. Unabhängig von der Art der Videoquelle können die Adaptionseinheiten die empfangenen Videodaten konvertieren und in einen einheitlichen Farbraum, insbesondere in den Farbraum YCrCb 4:2:2 (8Bit), überführen. Hierdurch ist es möglich, dass die Adaptionseinheiten die wesentlichen Videoinformationen herausfiltern. Die Anzahl der Adaptionseinheiten kann der Anzahl der Videoquellen entsprechen. Die Anzahl der Adaptionseinheiten kann der Anzahl der Receiver entsprechen. Es ist möglich, dass die Adaptionseinheiten den Receivern in Datenübertragungsrichtung nachgeschaltet sind. Die Adaptionseinheiten können den Videodaten der mehreren Videoquellen bei der Konvertierung ein Start- und/oder ein Endsignal, insbesondere ein Start-of-Frame-Signal und ein End-of-Line-Signal, hinzufügen. Dies kann zur Bildrekonstruierung der Videodaten die spätere Zuordnung der Videodaten zu den Videoquellen ermöglichen.

Es hat sich darüber hinaus als vorteilhaft erwiesen, wenn die Verteilereinheit mehrere Speicher, insbesondere First-In-First-Out Speicher, zur Zwischenspeicherung der Videodaten, insbesondere der konvertierten Videodaten, aufweist. Durch die Speicher lassen sich die Videodaten in der Verteilereinheit zwischenspeichern. Die Speicher können als asynchrone Speicher, insbesondere asynchrone First-In-First-Out Speicher, ausgestaltet sein. Es ist möglich, dass die Anzahl der Speicher hierbei der Anzahl der Videoquellen entspricht. Es ist ferner möglich, dass jeder Speicher einer Adaptionseinheit zugeordnet ist. Die Speicher können den Adaptionseinheiten in Datenübertragungsrichtung nachgeschaltet sein. Es ist denkbar, dass die Speicher lediglich die gefilterten Videodaten der Adaptionseinheiten speichern. Ferner können die Speicher die Videodaten auf einen gemeinsamen Takt zur Übertragung synchronisieren.

Vorteilhafterweise weist die Verteilereinheit einen Frame-Packer zum Packen der Videodaten in mehrere parallele Datenframes auf, wobei die parallelen Datenframes in der dem Frame-Packer nachgeschalteten Serialisierungseinheit zu einem seriellen Datenframe serialisierbar sind. Der Frame-Packer ermöglicht es, die Videodaten zunächst in mehrere parallele Datenframes zu packen. Die parallelen Datenframes können von der Serialisierungseinheit zur Übertragung der Videodaten als serieller Datenframe serialisiert werden. Die Serialisierungseinheit kann dem Frame-Packer in Datenübertragungsrichtung nachgeschaltet sein. Es hat sich bewährt, wenn ein Datenframe eine Datenbreite von 64 Bit aufweist. Es können sich die Videodaten von drei unterschiedlichen Videoquellen in einen Datenframe packen lassen. Bei mehr als drei Videoquellen ist es möglich, dass mehrere parallele Datenframes gepackt werden. Es kann vorgesehen sein, dass ein Datenframe neben den Videodaten auch Kodierungs-Bits enthält, welche die Zuordnung der Videodaten zu der jeweiligen Videoquelle ermöglichen. Es ist möglich, dass der Frame-Packer den mehreren Speichern in Datenübertragungsrichtung nachgeschaltet ist. Es ist denkbar, dass die Speicher durch den Frame-Packer synchron, insbesondere über einen Takt, auslesbar sind. Hierdurch können die zwischengespeicherten Videodaten der Speicher, welche asynchron sein können, synchronisiert werden. Der Frame-Packer kann ebenfalls einen Multiplexer aufweisen, wodurch die Videodaten von dem Frame-Packer aus durch das Multiplexverfahren übertragbar sind. Die parallelen Datenframes, welche jeweils aus den Videodaten von mehreren, insbesondere drei, Videoquellen bestehen können, können durch die Serialisierungseinheit zu einem, insbesondere einzelnen, seriellen Datenframe serialisiert werden.

Ferner hat es sich bewährt, wenn die Verteilereinheit eine Verschlüsselungseinheit zur Verschlüsselung der Videodaten der mehreren Videoquellen aufweist. Hierdurch lassen sich die Videodaten vor unbefugtem Zugriff schützen. Über die Verschlüsselungseinheit können die mehreren parallelen Datenframes verschlüsselt werden. Die Verschlüsselungseinheit kann dem Frame-Packer in Datenübertragungsrichtung nachgeschaltet sein.

Ferner hat es sich darüber hinaus bewährt, wenn die Verteilereinheit einen Kodierer zum Gleichspannungsausgleich der mehreren parallelen Datenframes aufweist. Der Kodierer kann den Gleichspannungsausgleich der parallelen Datenframes ermöglichen. Es ist möglich, dass der Kodierer als 8b/10b-Kodier-Einheit ausgebildet ist. Es ist möglich, dass der Kodierer der Verschlüsselungseinheit in Datenübertragungsrichtung nachgeschaltet ist. Es ist jedoch ebenso denkbar, dass der Kodierer dem Frame-Packer in Datenübertragungsrichtung nachgeschaltet ist. Es ist möglich, dass die Serialisierungseinheit dem Kodierer in Datenübertragungsrichtung nachgeschaltet ist.

Ferner hat es sich als vorteilhaft erwiesen, wenn die Verteilereinheit einen Transmitter zur Übertragung des seriellen Datenframes über den Lichtwellenleiter an die Empfangseinheit aufweist. Durch den Transmitter lässt sich der serielle Datenframe über den Lichtwellenleiter übertragen. Es ist möglich, dass an den Transmitter der Lichtwellenleiter angeschlossen ist. Ferner ist es möglich, dass der Transmitter der Serialisierungseinheit in Datenübertragungsrichtung nachgeschaltet ist. Es ist möglich, dass die Verteilereinheit eine Vielzahl an Transmittern zur Übertragung des seriellen Datenframes über den Lichtwellenleiter aufweist. Dies ist insbesondere vorteilhaft, wenn das Videosystem mehrere Empfangseinheiten aufweist, an welche der serielle Datenframe übertragen werden kann. Dies kann beispielsweise der Fall sein, wenn die Videodaten an unterschiedlichen Stellen innerhalb des Fahrzeugs empfangen werden sollen, um diese bspw. über einen an die Empfangseinheit angeschlossenes Anzeigemittel anzuzeigen. Es ist möglich, dass der Transmitter die Videodaten als elektrisches, insbesondere digitales, Signal empfängt und/oder als optisches Signal sendet.

Eine vorteilhafte Weiterbildung des Videosystems sieht vor, dass mindestens eine Videoquelle als Kamera ausgestaltet ist. Auf diese Weise lassen sich die Videodaten außerhalb des Fahrzeuges aufnehmen und bereitstellen. Es ist möglich, dass die Kamera als Wärmebild-, Nachtsicht- und/oder Panoramabild-Kamera ausgestaltet ist. Es ist darüber hinaus möglich, dass die Videoquelle als Rechner ausgestaltet ist und die Videodaten generiert werden. Es können mehrere oder alle Videoquellen als Kameras ausgestaltet sein.

Es hat sich darüber hinaus bewährt, wenn der Lichtwellenleiter als Single-Mode-Lichtwellenleiter oder als Multi-Mode-Lichtwellenleiter ausgestaltet ist. Es ist möglich, dass der als Single-Mode-Lichtwellenleiter ausgestaltete Lichtwellenleiter hohe Bandbreiten latenzarm überträgt. Optional ist es möglich, dass der als Single-Mode-Lichtwellenleiter ausgestaltete Lichtwellenleiter die Bandbreite weiter erhöhen kann, indem zur zeitgleichen Übertragung mehrerer serieller Datenframes über einen Lichtwellenleiter, die Datenframes mit unterschiedlichen Übertragungsfrequenzen, also als Licht unterschiedlicher Wellenlängen, übertragbar sind.

Es hat sich darüber hinaus als vorteilhaft erwiesen, wenn der Lichtquellenleiter als Glastubus eines Periskops zur Übertragung des seriellen Datenframes ausgestaltet ist. Hierdurch lässt sich der serielle Datenframe kontaktlos übertragen. Der serielle Datenframe kann als Lichtsignal über das Periskop übertragen werden. Es ist möglich, dass das Periskop zwischen einem oberen Teil des Fahrzeugs, insbesondere einem Panzerturm, und dem unteren Teil des Fahrzeugs, insbesondere einer Panzerwanne, angeordnet ist. Hierdurch ist es möglich, dass eine Verkabelung zwischen dem unteren und dem oberen Teil des Fahrzeugs entfällt. Ferner ist es möglich, dass das Periskop, insbesondere dessen Glastubus, frei drehbar, insbesondere um 360°, gelagert ist. Insbesondere für den Fall, dass das Periskop zwischen zwei zueinander drehbewegbaren Fahrzeugteilen angeordnet ist, können so Bewegungseinschränkungen der Fahrzeugteile durch aufwendige Verkabelungen vermieden werden. Es ist ebenso denkbar, dass der Lichtquellenleiter als Kabel, insbesondere Glasfaserkabel, ausgestaltet ist.

Vorteilhafterweise ist an die Empfangseinheit mindestens ein Anzeigemittel zur Anzeige der Videodaten innerhalb des Fahrzeugs angeschlossen. Hierdurch können die von der Empfangseinheit empfangenen Videodaten insbesondere einem Besatzungsmitglied dargestellt werden. Es ist möglich, dass das Anzeigemittel die Videodaten mehrerer Videoquellen anzeigt. Das Anzeigemittel kann als Display ausgestaltet sein. An die Empfangseinheit können mehrere Anzeigemittel angeschlossen sein. Über die Empfangseinheit lassen sich die seriellen Datenframes empfangen und verarbeiten, so dass das Anzeigemittel anschließend die Videodaten anzeigen kann. Die Anzahl an Anzeigemitteln kann der Anzahl an Empfangseinheiten entsprechen. Es ist möglich, dass die Anzahl an Empfangseinheiten der Anzahl an Lichtwellenleitern entspricht. Es ist denkbar, dass mehrere Anzeigemittel an eine Empfangseinheit angeschlossen sind.

Es hat sich bewährt, wenn die Empfangseinheit als Leiterkarte ausgestaltet ist. Hierdurch lässt sich die Empfangseinheit kompakt ausgestalten.

Vorteilhafterweise sind die Videodaten von der Empfangseinheit als optische Signale empfangbar und/oder von der Empfangseinheit aus als elektrische Signale, insbesondere zu einem der Anzeigemittel hin, übertragbar. Die Empfangseinheit kann die als optische Signale übermittelten Videodaten in elektrische Signale umwandeln.

Es hat sich darüber hinaus als vorteilhaft erwiesen, wenn die Empfangseinheit einen Receiver zum Empfangen des seriellen Datenframes aufweist. Der Receiver kann mit dem Lichtwellenleiter verbunden sein. Es ist möglich, dass der Receiver die Videodaten als optisches Signal empfängt und/oder als elektrisches Signal weiterleitet.

Vorteilhafterweise ist der serielle Datenframe in der Empfangseinheit in die Videodaten der mehreren Videoquellen entpackbar. Hierdurch lässt sich der serielle Datenframe, welcher über den Lichtwellenleiter gemeinsam übertragen wird, in die Videodaten der einzelnen Videoquellen zerlegen. Die entpackten, unkomprimierten Videodaten können sich hierbei den Videoquellen zuordnen lassen. Dies kann insbesondere über Kodierbits des Datenframes, welche die Zuordnung ermöglichen, erfolgen.

Es hat sich ferner bewährt, wenn die Empfangseinheit eine Parallelisierungseinheit zum Parallelisieren des seriellen Datenframes zu parallelen Datenframes aufweist. Hierdurch wird ermöglicht, dass der serielle Datenframe in parallele Datenframes parallelisiert wird. Es ist möglich, dass die parallelen Datenframes jeweils aus den Videodaten mehrerer Videoquellen, insbesondere von drei Videoquellen, bestehen. Die Parallelisierungseinheit kann in Datenübertragungsrichtung dem Receiver nachgeschaltet sein. Es ist möglich, dass die parallelen Datenframes der Parallelisierungseinheit der Empfangseinheit gleich zu den parallelen Datenframes des Frame-Packers der Verteilereinheit sind.

Vorteilhafterweise weist die Empfangseinheit einen Dekodierer zur Dekodierung der parallelen Datenframes auf. Der Dekodierer kann hierbei insbesondere als 8B/10B-Decoding-Einheit ausgestaltet sein.

Es hat sich darüber hinaus bewährt, wenn die Empfangseinheit eine Entschlüsselungseinheit zum Entschlüsseln der Videodaten der mehreren Videoquellen aufweist. Über die Entschlüsselungseinheit können die Videodaten der mehreren Videoquellen entschlüsselt werden. Insbesondere ist es möglich, die parallelen Datenframes über die Entschlüsselungseinheit zu entschlüsseln. Die Entschlüsselungseinheit kann dem Dekodierer in Datenübertragungsrichtung nachgeschaltet sein.

Vorteilhafterweise weist die Empfangseinheit einen Frame-Entpacker zum Entpacken der parallelen Datenframes in die Videodaten auf. Hierdurch ist es möglich, die parallelen Datenframes wieder in die einzelnen Videodaten der Videoquellen zu zerlegen. Die Videodaten können den einzelnen Videoquellen zugeordnet werden. Es ist möglich, dass der Frame-Entpacker der Entschlüsselungseinheit in Datenübertragungsrichtung nachgeschaltet ist. Ferner ist es ebenso möglich, dass der Frame-Entpacker dem Dekodierer in Datenübertragungsrichtung nachgeschaltet ist. Der Frame-Entpacker kann einen Demultiplexer aufweisen.

Vorteilhafterweise weist die Empfangseinheit eine Videoverarbeitungseinheit zum Farbkonvertieren, Zusammensetzen, Skalieren und/oder Zuschneiden der unkomprimierten Videodaten auf. Die Videoverarbeitungseinheit kann dem Frame-Packer in Datenübertragungsrichtung nachgeschaltet sein. Die Videoverarbeitungseinheit kann die Videodaten der einzelnen Videoquellen verarbeiten.

Vorteilhafterweise wird an die Empfangseinheit eine Grafikeinheit zur Überlagerung des unkomprimierten Videodaten mit einer grafischen Oberfläche angeschlossen. Durch die Grafikeinheit lässt sich eine grafische Oberfläche über die unkomprimierten Videodaten, insbesondere teilweise, überlagern, so dass sich neben den unkomprimierten Videodaten auch weitere Informationen, wie beispielsweise Fahrzeuginformationen, einem Benutzer anzeigen lassen. Die Grafikeinheit kann als Grafikkarte ausgestaltet sein.

Ferner hat es sich darüber hinaus bewährt, wenn das Videosystem mehrere Empfangseinheiten aufweist, welche mit der Verteilereinheit über jeweils einen Lichtwellenleiter zur Übertragung der Videodaten als serieller Datenframe verbunden sind. Hierdurch lassen sich die bereitgestellten Videodaten der Videoquellen durch mehrere Empfangseinheiten, insbesondere an unterschiedlichen Stellen im Fahrzeug, empfangen. Es ist möglich, dass die Empfangseinheiten die Videodaten empfangen und über Anzeigemittel mehreren Benutzern, beispielsweise Besatzungsmitgliedern, anzeigen. Die Empfangseinheiten können an unterschiedlichen Positionen im Fahrzeug angeordnet sein. Es ist möglich, dass die Empfangseinheiten gleichartig, insbesondere als Leiterkarte, ausgestaltet sind.

Es hat sich bewährt, wenn die Verteilereinheit, der oder die Lichtwellenleiter und die eine oder mehrere Empfangseinheiten als Teil einer Verteilerbox ausgestaltet sind. Es ist möglich, dass die Verteilerbox ein Gehäuse aufweist. In dem Gehäuse können die Verteilereinheit, der oder die Lichtwellenleiter und die eine oder mehrere Empfangseinheiten angeordnet sein. Die Verteilerbox kann eine kompakte Baueinheit sein.

Es wird zur **Lösung** der vorstehend genannten Aufgabe darüber hinaus bei einer Verteilerbox zum Verteilen von unkomprimierten Videodaten, insbesondere zur Anwendung in einem Videosystem mit einem oder mehreren der vorstehenden Merkmale, mit einer Verteilereinheit, welche mehrere Anschlüsse zum Anschluss von die unkomprimierten Videodaten erzeugenden Videoquellen aufweist, und mit mindestens einer mit der Verteilereinheit verbundenen Empfangseinheit, wobei die Verteilereinheit und die Empfangseinheit in einem, insbesondere gemeinsamen, Gehäuse angeordnet sind, vorgeschlagen, dass die unkomprimierten Videodaten von der Verteilereinheit aus zu der mindestens einen Empfangseinheit über einen gemeinsamen Lichtwellenleiter als serieller Datenframe übertragbar sind. Die Verteilerbox kann in einem Videosystem, welches eines oder mehrerer der vorstehend genannten Merkmale aufweist, angewendet werden. Es ist möglich, dass die Verteilerbox ein Teil des Videosystems bildet.

Die Verteilerbox kann mehrere Empfangseinheiten und/oder mehrere Verteilereinheiten aufweisen. Bevorzugt sind mehrere Empfangseinheiten jeweils über einen Lichtwellenleiter mit einer gemeinsamen Verteilereinheit verbunden sein.

Die Verteilereinheit der Verteilerbox kann eines oder mehrere der vorstehenden im Zusammenhang mit der Verteilereinheit des Videosystems erläuterten vorteilhaften Merkmale aufweisen. Die Empfangseinheit der Verteilerbox kann eines oder mehrere der vorstehenden im Zusammenhang mit der Empfangseinheit des Videosystems erläuterten vorteilhaften Merkmale aufweisen. Der Lichtwellenleiter der Verteilerbox kann eines oder mehrere der vorstehenden im Zusammenhang mit dem Lichtwellenleiter des Videosystems erläuterten vorteilhaften Merkmale aufweisen.

Eine Weiterbildung der Verteilerbox sieht vor, dass das Gehäuse als einteiliges Gehäuse ausgestaltet ist. Hierdurch lässt sich eine besonders kompakte Verteilerbox realisieren.

Die Verteilerbox kann einen oder mehrere Anschlüsse zum Anschließen einer Videoquelle aufweisen. Bevorzugt sind diese Anschlüsse mit einer gemeinsamen oder mit mehreren Verteilereinheiten verbunden, insbesondere per elektrischer Datenverbindung.

Ferner kann die Verteilerbox einen oder mehrere Anschlüsse zum Anschließen einer Anzeigeeinheit aufweisen. Diese Anschlüsse können mit einer gemeinsamen oder mit mehreren Empfangseinheiten verbunden sein, insbesondere per elektrischer Datenverbindung.

Es ist vorteilhaft, wenn die Anschlüsse der Verteilerbox als SDI-, insbesondere HD-SDI-, DVI-, FBAS-,CoaxPress- und/oder PAL-Anschlüsse ausgestaltet sind. Hierdurch lassen sich unkomprimierte Videodaten von an den Anschlüssen angeschlossenen Videoquellen zur Verfügung stellen. Die Anschlüsse können dabei unterschiedlich ausgestaltet sein. So ist es beispielsweise denkbar, dass die Verteilerbox einen als SDI- und einen als PAL-Anschluss ausgestalteten Anschluss aufweist. Die Videoquellen können über militärische Stecker an den Anschlüssen angeschlossen werden.

Es hat sich bewährt, wenn die Verteilerbox weitere Anschlüsse zum Anschließen von Anzeigemitteln aufweist. Es ist möglich, dass Anzeigemittel an die Anschlüsse zur Anzeige der unkomprimierten Videodaten angeschlossen werden. Die Anschlüsse können unterschiedlich ausgestaltet sein. Die Anschlüsse können als SDI-, DVI-, FBAS-, CoaxPress- und/oder PAL-Ausgänge ausgestaltet sein. Die Anzeigemittel können über militärische Stecke an den Anschlüssen angeschlossen werden.

Vorteilhafterweise weist die Verteilerbox einen oder mehrere Grafikanschlüsse zum Anschließen einer Grafikeinheit auf. Über den Grafikanschluss lässt sich eine Grafikeinheit an die Empfangseinheit anschließen, so dass die empfangenen unkomprimierten Videodaten mit einer grafischen Oberfläche überlagerbar sind. Der Grafikanschluss kann als DVI-Anschluss ausgestaltet sein.

Bevorzugt weist die Verteilerbox eine oder mehrere Empfangseinheiten auf, die jeweils mit mindestens einem Anschluss zum Anschließen einer Anzeigeeinheit und einem Grafikanschluss verbunden ist, insbesondere per elektrischer Datenverbindung.

Neben dem erfindungsgemäßen Videosystem wird zur **Lösung** der vorstehend genannten Aufgabe bei einem Fahrzeug, insbesondere einem militärischen Fahrzeug, mit einem Videosystem zur Verteilung von unkomprimierten Videodaten in dem Fahrzeug vorgeschlagen, dass das Videosystem eines oder mehrere der vorstehend genannten Merkmale aufweist. Die im Zusammenhang mit dem Videosystem dargelegten Vorteile ergeben sich gleichermaßen für das erfindungsgemäße Fahrzeug.

Eine vorteilhafte Weiterbildung des erfindungsgemäßen Fahrzeugs sieht vor, dass das Fahrzeug einen Fahrzeugturm, insbesondere einen Waffenturm, und eine Fahrzeugwanne aufweist, wobei der Fahrzeugturm gegenüber der Fahrzeugwanne drehbar ist. Der Fahrzeugturm kann gegenüber der Fahrzeugwanne uneingeschränkt, also um 360° oder ein Vielfaches von 360°, drehbar sein. Es ist möglich, dass die Richtbewegungen des Waffenturms zum Abfeuern einer Waffe auf Grundlage der latenzarm übertragbaren Videodaten erfolgt.

In diesem Zusammenhang hat es sich als vorteilhaft erwiesen, wenn der Lichtwellenleiter von dem Fahrzeugturm aus zu der Fahrzeugwanne hin verläuft. Die Videoquellen können außen am Fahrzeug an dem Fahrzeugturm angeordnet sein. Die Verteilereinheit kann innen in dem Fahrzeugturm angeordnet sein. Die Empfangseinheit kann innen in der Fahrzeugwanne angeordnet sein. Der Lichtwellenleiter kann zwischen der Verteilereinheit und der Empfangseinheit angeordnet sein. Der Lichtwellenleiter kann die Videodaten als seriellen Datenframe kontaktlos, insbesondere zwischen dem Fahrzeugturm und der Fahrzeugwanne übertragen. Der serielle Datenframe kann beispielweise kontaktlos als sichtbares oder nicht sichtbares Lichtsignal übertragbar sein. Besonders vorteilhaft in diesem Zusammenhang kann der Lichtwellenleiter als Glastubus eines Periskops ausgestaltet sein. Der serielle Datenframe kann als optisches Signal über die Optik des als Periskop ausgestalteten Lichtwellenleiters übertragbar sein.

Darüber hinaus wird zur **Lösung** der vorstehend genannten Aufgabe ein Verfahren zur Verteilung von unkomprimierten Videodaten in einem Fahrzeug, insbesondere einem militärischen Fahrzeug, wobei mehrere Videoquellen Videodaten bereitstellen und die Videodaten über mindestens eine Empfangseinheit empfangen werden, wobei die Videoquellen über eine Verteilereinheit mit der mindestens einen Empfangseinheit verbunden sind, zur Lösung der vorstehend genannten Aufgabe vorgeschlagen, dass die unkomprimierten Videodaten der mehreren Videoquellen von der Verteilereinheit aus zu der mindestens einen Empfangseinheit über einen Lichtwellenleiter als serieller Datenframe gemeinsam übertragen werden. Es gelten die zuvor im Zusammenhang mit dem Videosystem und dem Fahrzeug genannten Vorteile.

Weitere Ausgestaltungen und Vorteile der Erfindung werden nachfolgend anhand von Figuren dargelegt werden. Darin zeigen:
- Fig. 1: ein Videosystem in schematischer Darstellung gemäß dem Stand der Technik,
- Fig. 2: ein erfindungsgemäßes Videosystem in schematischer Darstellung,
- Fig. 3: einen Ausschnitt eines erfindungsgemäßen Videosystems mit detaillierter Darstellung einer Verteilereinheit in schematischer Darstellung,
- Fig. 4: einen Ausschnitt des erfindungsgemäßen Videosystems gemäß Fig. 3 mit detaillierter Darstellung einer Empfangseinheit in schematischer Darstellung,
- Fig. 5a, b: mehrere parallele Datenframes sowie ein gemeinsamer serieller Datenframe in schematischen Darstellungen,
- Fig. 6: ein erfindungsgemäßes Fahrzeug mit einem Videosystem in schematischer Darstellung, und
- Fig. 7: ein erfindungsgemäßes Videosystem mit Verteilerbox in schematischer Darstellung.

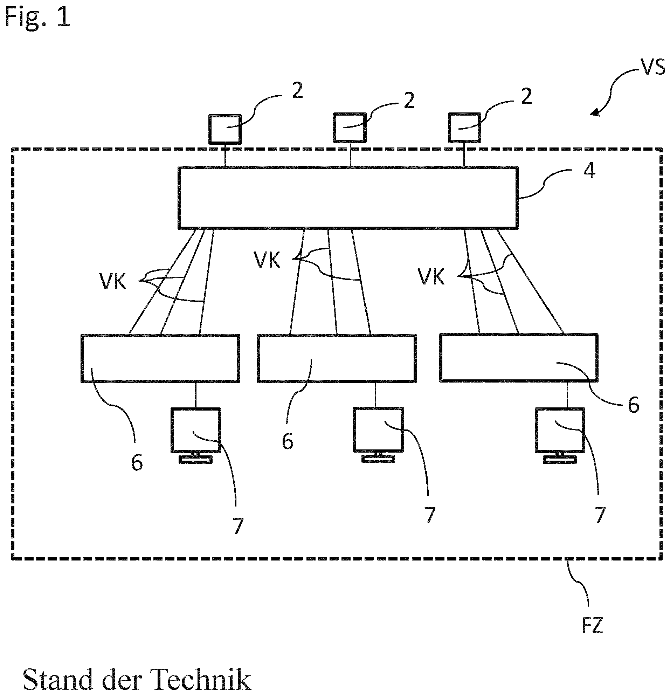

Die Fig. 1 stellt ein Videosystem VS zur Verteilung von Videodaten dar, wie es aus dem Stand der Technik bekannt ist. Derartige Videosysteme VS können beispielsweise in Fahrzeugen FZ eingesetzt werden, um die Verteilung von Videodaten in dem Fahrzeug FZ zu ermöglichen. Das dargestellte Videosystem VS weist hierfür mehrere Videoquellen 2 auf, welche aufgenommene oder generierte Videodaten an eine Verteilereinheit 4 übertragen. Die Verteilereinheit 4 ist mit mehreren Empfangseinheiten 6 verbunden, welche die Videodaten empfangen und verarbeiten können. Die Empfangseinheiten 6 können an unterschiedlichen Stellen innerhalb des Fahrzeugs FZ angeordnet sein. Zur Anzeige der Videodaten weist das in der Fig. 1 dargestellte Videosystem VS ferner mehrere Anzeigemittel 7 auf. Die Anzeigemittel 7 sind mit den Empfangseinheiten 6 verbunden und ermöglichen das Darstellen der Videodaten der Videoquellen 2. Hierfür verteilt die Verteilereinheit 4 die Videodaten zunächst an die Empfangseinheiten 6, wobei die Videodaten jeder Videoquelle 2 gesondert über ein entsprechendes elektrisches Verbindungskabel VK verteilt werden. Es ist ersichtlich, dass hierfür je Videoquelle 2 und je Empfangseinheit 6 mindestens ein Verbindungskabel VK erforderlich ist. Hieraus resultiert bei dem Videosystem VS der Fig. 1, dass für die drei Videoquellen 2 je Empfangseinheit 6 drei Verbindungskabel VK zur Verteilung der Videodaten erforderlich sind. Durch die drei Empfangseinheiten 6 resultieren damit insgesamt neun Verbindungskabel VK in dem Videosystem VS des Stands der Technik. Aufgrund der Vielzahl an erforderlichen Verbindungskabeln VK ergibt sich bei dem Videosystem VS insofern nachteilig, dass zur Verbindung der Verteilereinheit 4 mit den Empfangseinheiten 6 eine überaus aufwendige Verkabelung erforderlich ist.

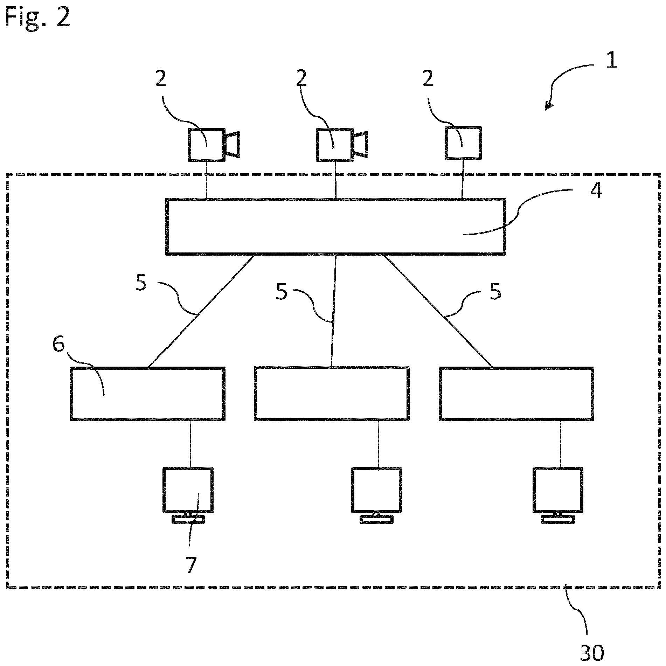

In Fig. 2 ist dahingegen ein erfindungsgemäßes Videosystem 1 dargestellt. Das Videosystem 1 ermöglicht die Verteilung von Videodaten 10 in einem Fahrzeug 30, insbesondere einem gepanzerten Fahrzeug mit eingeschränkter Sicht von innen nach außen, beispielsweise ein Panzer.

Die Videodaten 10 werden bei dem Videosystem 1 als unkomprimierte Rohdaten übertragen, welche durch Videoquellen 2 bereitgestellt werden. Durch die Übertragung unkomprimierter Videodaten 10 entfällt bei dem Videosystem 1 ein Komprimierungsschritt, welcher zwangsläufig zu Latenzen führen würde. Durch die Übertragung der Videodaten 10 als unkomprimierte Rohdaten werden insoweit Latenzen vermieden. Darüber hinaus enthalten die unkomprimierten Videodaten 10 auch sämtliche Bildinformationen, so dass die Bildqualität entsprechend hoch ist und wichtige Details nicht durch Komprimierung verloren gehen können. Dies kann insbesondere im militärischen Bereich erforderlich sein.

Das Videosystem 1 weist insgesamt drei Videoquellen 2 auf. Die Videoquellen 2 sind als zwei Kameras und als ein Bildsensor ausgestaltet. Die Videoquellen 2 befinden sich außerhalb des Fahrzeugs 30 und nehmen die Umgebung des Fahrzeugs 30 auf.

Die unkomprimierten Videodaten 10 der Videoquellen 2 werden an eine Verteilereinheit 4 des Videosystems 1 übertragen. Die Videoquellen 2 sind hierfür mit der Verteilereinheit 4 verbunden. Die Verteilereinheit 4 empfängt separat die Videodaten 10 aller Videoquellen 2. Die Verteilereinheit 4 ist insofern als zentrale Verteilereinheit ausgestaltet.

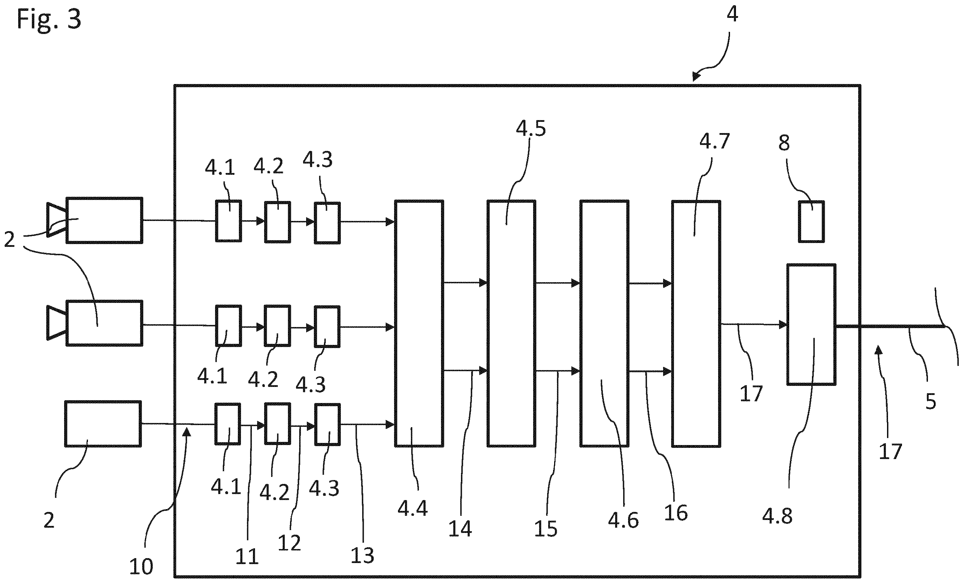

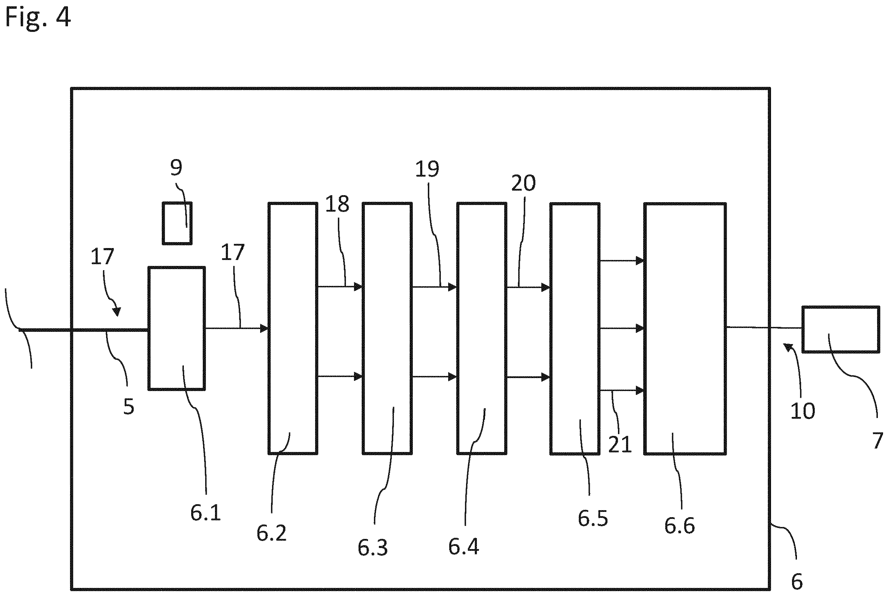

Von der Verteilereinheit 4 aus werden die unkomprimierten Videodaten 10 der Videoquellen 2 an drei Empfangseinheiten 6 übermittelt. Die Empfangseinheiten 6 ermöglichen das Empfangen und Verarbeiten der Videodaten 10, wobei die Empfangseinheiten 6 dabei an unterschiedlichen Stellen innerhalb des Fahrzeugs 30 angeordnet sein können. Auf die genaue Ausgestaltung der Verteilereinheit 4 sowie der Empfangseinheiten 6 wird noch im Zusammenhang mit den Fig. 3 und 4 eingegangen werden.

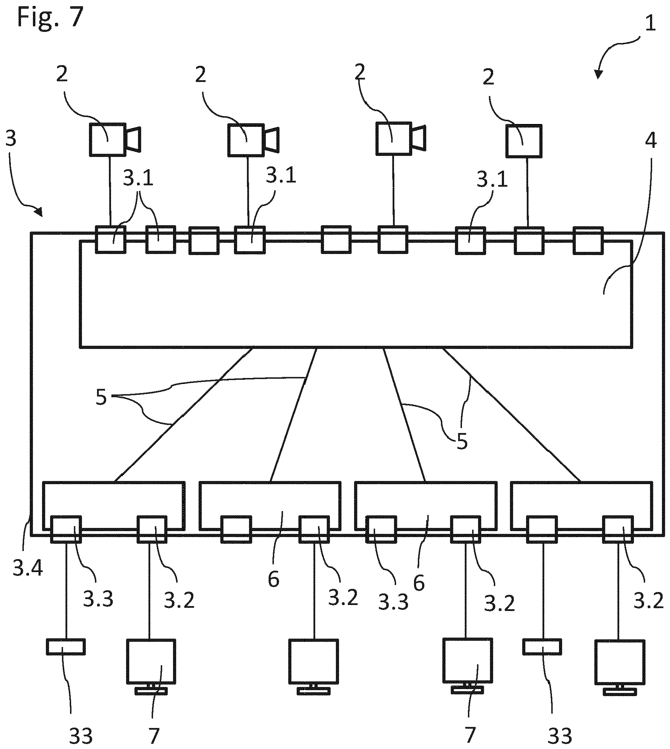

An die Empfangseinheiten 6 sind Anzeigemittel 7 angeschlossen. Die Anzeigemittel 7 ermöglichen das grafische Anzeigen der Videodaten 10 im Inneren des Fahrzeuges 30. Es ist beispielsweise möglich, dass die Videodaten 10 der Videoquellen 2 im Inneren des Fahrzeuges 30 einem Mitfahrer und/oder einem Besatzungsmitglied angezeigt werden. Die Anzeigemittel 7 können beispielsweise als einfaches Display ausgestaltet sein. Es ist möglich, dass die Verteilereinheit 4, der Lichtwellenleiter 5 sowie die Empfangseinheit 6 eine bauliche Einheit bilden. An die bauliche Einheit können dann Videoquellen 2 und Anzeigemittel 7 nach Bedarf angeschlossen werden. Auf die bauliche Einheit in Form einer Verteilerbox wird auch noch im Zusammenhang mit der Fig. 7 näher eingegangen werden.

Abweichend vom Videosystem VS des Standes der Technik gemäß Fig. 1 überträgt die Verteilereinheit 4 des Videosystems 1 die Videodaten 10 mehrerer Videoquellen 2 jeweils über einen gemeinsamen Lichtwellenleiter 5 zu der jeweiligen Empfangseinheit 6. Die Videodaten 10 werden als serieller Datenframe 17 übertragen, weshalb lediglich ein Lichtwellenleiter 5 zu jeder Empfangseinheit 6 erforderlich ist. Der Lichtwellenleiter 5 ermöglicht die Übertragung von unkomprimierten Videodaten 10 mehrerer Videoquellen 2 durch eine hohe verfügbare Bandbreite. Im Vergleich zu dem Videosystem VS des Standes der Technik gemäß Fig. 1 ist aus Fig. 2 ersichtlich, dass sich bereits bei Videosystemen 1 mit lediglich drei Videoquellen 2 und drei Empfangseinheiten 6 mit drei Anzeigemitteln 7 weitaus weniger aufwendige Verkabelungen ergeben.

Bei dem erfindungsgemäßen Videosystem 1 entfällt bei Übertragung der Videodaten 10 als serieller Datenframe 17 eine Komprimierung der Videodaten 10. Die Videodaten 10 werden als unkomprimierte Rohdaten als serieller Datenframe 17 übertragen, was die latenzarme Übertragung ermöglicht. Bei dem aus dem Stand der Technik bekannten Videosystem VS der Fig. 1 dahingegen werden die Videodaten 10 zunächst in ein komprimiertes Dateiformat konvertiert, wie beispielsweise MPEG, wobei bereits durch das Komprimierungsverfahren Latenzen auftreten. Bei dem Videosystem VS ist eine Übertragung der Videodaten 10 als Rohdaten nicht möglich, da die erforderliche Bandbreite hier nicht zur Verfügung steht.

Damit die Videodaten 10 der mehreren Videoquellen 2 von der Verteilereinheit 4 aus jeweils zu den Empfangseinheiten 6 über einen gemeinsamen Lichtwellenleiter 5 als serieller Datenframe 17 übertragbar sind, ist die Verteilereinheit 4, wie es nachfolgend im Zusammenhang mit der Fig. 3 beschrieben werden wird, ausgestaltet.

Die Fig. 3 stellt einen Ausschnitt des erfindungsgemäßen Videosystems 1 schematisch dar, wobei insbesondere die Ausgestaltung der Verteilereinheit 4 abgebildet ist. Die Verteilereinheit 4 ist als Leiterkarte ausgestaltet. Durch die kompakte Anordnung sämtlicher Bestandteile der Verteilereinheit 4 wird eine insgesamt kompakte Bauform dieser ermöglicht. Dies kann insbesondere für Anwendungszwecke relevant sein, welche einen begrenzten Bauraum zur Verfügung haben.

Die Verteilereinheit 4 ist mit den Videoquellen 2 verbunden, insbesondere per elektrischer Datenverbindung. Um die Videodaten 10 der Videoquellen 2 zu empfangen, weist die Verteilereinheit 4 mehrere Receiver 4.1 auf. Im Allgemeinen ist es möglich, eine Vielzahl, insbesondere mehr als drei, Videoquellen 2 an die Verteilereinheit 4 anzuschließen. Die Anzahl an Receivern 4.1 sollte hierfür vorteilhafterweise mit der Anzahl an Videoquellen 2 übereinstimmen. Die Receiver 4.1 dienen zum Empfang der Videodaten 10 der jeweils zugeordneten Videoquelle 2. Die Verteilereinheit 4 weist insofern drei Receiver 4.1 auf. Die Receiver 4.1 sind hierbei derart ausgestaltet, dass unterschiedliche Arten von Videoquellen 2 an die Verteilereinheit 4 angeschlossen werden können.

Die von den Receivern 4.1 empfangenden Videodaten 10 werden von den Receivern 4.1 aus zu mehreren Adaptionseinheiten 4.2 übermittelt. Die Adaptionseinheiten 4.2 sind den Receivern 4.1 daher in Datenübertragungsrichtung nachgeschaltet. Die Verteilereinheit 4 weist gemäß Fig. 3 je Receiver 4.1 eine Adaptionseinheit 4.2 auf. Die Anzahl an Adaptionseinheiten 4.2 stimmt daher mit der Anzahl an Receivern 4.1 und der Anzahl an Videoquellen 2 überein. Die Receiver 4.1 stellen die Videodaten 10 als digitales Signal 11 den Adaptionseinheiten 4.2 zur Verfügung.

Die Adaptionseinheiten 4.2 konvertieren die von den Receivern 4.1 übermittelten Videodaten 10 in einen einheitlichen Farbraum. Die von den Receivern 4.1 übermittelten Videodaten 10 können hierbei insbesondere als digitale Signale 11 übermittelt sein. Durch die Konvertierung der Videodaten 10 durch die Adaptionseinheiten 4.2 ist es möglich, Videoquellen 2, welche Videodaten 10 unterschiedlichen Formats aufnehmen und/oder generieren, in dem Videosystem 1 vorzusehen. So ist es beispielsweise möglich, dass die Videoquellen 2 SDI-, PAL- und/oder DVI-Videodaten aufnehmen und/oder generieren und diese an die Receiver 4.1 übermitteln. Die Adaptionseinheiten 4.2 konvertieren die jeweils empfangenen Videodaten 10 in den Farbraum YCrCb 4:2:2 (8 Bit). Alternativ ist es jedoch möglich, dass die Adaptionseinheiten 4.2 die empfangenen Videodaten 10 auch in alternative Farbräume konvertieren. Bei der Konvertierung der Videodaten 10 in einen einheitlichen Farbraum werden die wesentlichen Videoinformationen herausgefiltert, so dass Videoinformationen, welche zur späteren Anzeige der Videodaten 10 über die Anzeigemittel 7 erforderlich sind, verworfen werden können.

Ferner weisen die Adaptionseinheiten 4.2 den Videodaten 10 ein Startsignal SOF (Start of Frame, erster sichtbarer Pixel) und ein Endsignal EOL (End of Line, letzter Pixel in einer Zeile) zu. Das Startsignal SOF und das Endsignal EOL dienen der Zuordnung der Videodaten 10 zu den Videoquellen 2.

Die von den Adaptionseinheiten 4.2 adaptierten Videodaten 12, welche als Videoframe weitergeleitet werden, werden an jeweils einen Speicher 4.3 übermittelt. Die Speicher 4.3 der Verteilereinheit 4 sind den Adaptionseinheiten 4.2 in Datenübertragungsrichtung nachgeschaltet. Je Adaptionseinheit 4.2 ist dabei ein Speicher 4.3 vorgesehen.

Die drei Speicher 4.3 der Verteilereinheit 4 sind als First-In-First-Out Speicher ausgestaltet. Die adaptierten Videodaten 12 werden von den Adaptionseinheiten 4.2 jeweils an die Speicher 4.3 übertragen, wobei diese Übertragung Takt asynchron erfolgen kann.

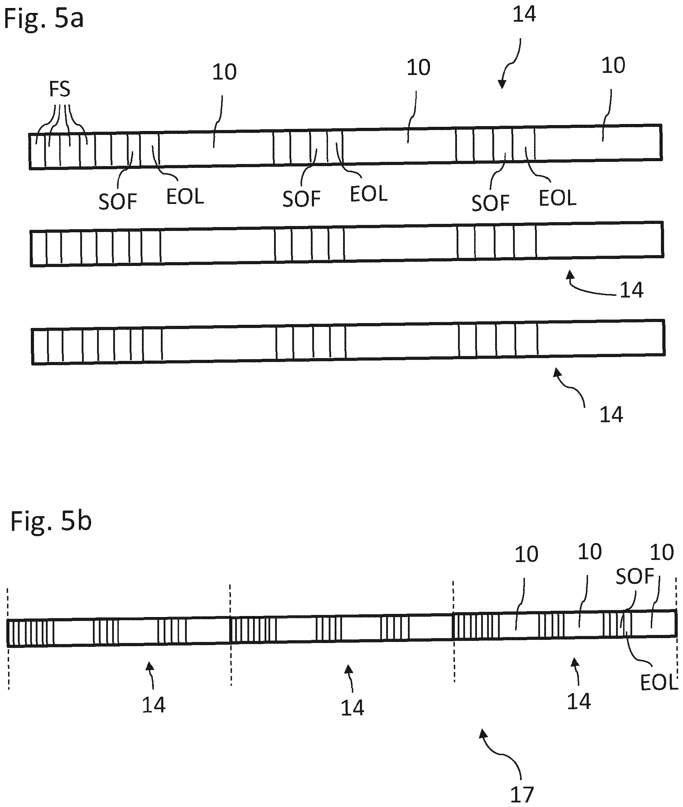

Die Verteilereinheit 4 weist ferner einen Frame-Packer 4.4. auf, welcher den Speichern 4.3 in Datenübertragungsrichtung nachgeschaltet ist. Der Frame-Packer 4.4 ruft die in den Speichern 4.3 zwischengespeicherten Videodaten 13 ab. Hierzu werden die Speicher 4.3 parallel über einen Takt ausgelesen, wodurch eine Synchronisierung der zwischengespeicherten Videodaten 13 erfolgt. Der Frame-Packer 4.4 packt die zwischengespeicherten Videodaten 13 zu einem oder mehreren parallelen Datenframes 14 zusammen. Für die Datenframes 14 hat sich jeweils eine Datenbreite von 64 Bit als vorteilhaft erwiesen. Der Frame-Packer 4.4 packt die zwischengespeicherten Videodaten 13 von bis zu drei unterschiedlichen Videoquellen 2 zu einem Datenframe 14 zusammen. Auf die Datenframes 14 des Frame-Packers 4.4 wird auch noch einmal genauer im Zusammenhang mit Fig. 5 eingegangen werden.

Von dem Frame-Packer 4.4 aus werden die parallelen Datenframes 14, welche jeweils Videodaten 10 von mehreren Videoquellen 2 enthalten können, zu einer dem Frame-Packer 4.4 in Datenübertragungsrichtung nachgeschalteten Verschlüsselungseinheit 4.5 übertragen.

Die Verschlüsselungseinheit 4.5 ermöglicht eine Verschlüsselung der Videodaten 10, insbesondere der parallelen Datenframes 14. Hierdurch kann ein Schutz vor unbefugten Zugriffen erreicht werden. Die Verschlüsselungseinheit 4.5 ist nicht zwangsläufig erforderlich, so dass diese auch optional vorgesehen ist.

Die Verteilereinheit 4 weist darüber hinaus einen Kodierer 4.6 zum Gleichspannungsausgleich der verschlüsselten parallelen Datenframes 15 auf. Der Kodierer 4.6 ist dabei der Entschlüsselungseinheit 4.5 in Datenübertragungsrichtung nachgeschaltet. Der Kodierer 4.6 ist als 8B/10B-Kodiereinheit ausgebildet, so dass die von der Verschlüsselungseinheit 4.5 verschlüsselten Datenframes entsprechend als 8B/10B-Code kodiert werden. Für den Fall, dass die Verteilereinheit 4 keine Verschlüsselungseinheit 4.5 aufweist, ist es vorteilhaft, wenn der Kodierer 4.6 dem Frame-Packer 4.4 in Datenübertragungsrichtung nachgeschaltet ist. Für diesen Fall ermöglicht der Kodierer 4.6 den Gleichspannungsausgleich der parallelen Datenframes 14.

Die in dem Kodierer 4.6 kodierten Datenframes 16, welche parallel und verschlüsselt sind, werden daraufhin in einer Serialisierungseinheit 4.7 serialisiert. Die Serialisierungseinheit 4.7 ist dem Kodierer 4.6 in Datenübertragungsrichtung nachgeschaltet. Die Serialisierungseinheit 4.7 serialisiert die kodierten parallelen Datenframes 16 zu einem serialisierten Datenframe 17, welcher dann über den gemeinsamen Lichtwellenleiter 5 übertragbar ist. Der serialisierte Datenframe 17 enthält insofern die Videodaten 10 mehrerer Videoquellen 2.

Zur Übertragung des seriellen Datenframes 17 weist die Verteilereinheit 4 einen Transmitter 4.8 auf. Der Transmitter 4.8 ist der Serialisierungseinheit 4.7 in Datenübertragungsrichtung nachgeschaltet. Der Transmitter 4.8 erhält den serialisierten Datenframe von der Serialisierungseinheit 4.7 und überträgt diesen über den an dem Transmitter 4.8 angeschlossenen Lichtwellenleiter 5. Der Transmitter 4.8 überträgt den seriellen Datenframe 17 dabei als optisches Signal. Es ist insofern möglich, dass der serielle Datenframe 17 als digitales Signal an den Transmitter 4.8 übertragbar ist und von diesem aus als optisches Signal über den Lichtwellenleiter 5 an die Empfangseinheit 6 übertragbar ist.

Bei der in Fig. 3 schematisch dargestellten Verteilereinheit 4 ist zur übersichtlicheren Darstellung lediglich ein einzelner an der Verteilereinheit 4 angeschlossener Lichtwellenleiter 5 dargestellt. Gemäß dem Ausführungsbeispiel in Fig. 2 sind jedoch mehrere Lichtwellenleiter 5, nämlich ein Lichtwellenleiter 5 je Empfangseinheit 6, an die Verteilereinheit 4 angeschlossen. Hierfür weist die Verteilereinheit 4 mehrere parallel angeordnete Transmitter 4.8 auf, welche in der Fig. 3 nicht dargestellt sind. Die Transmitter 4.8 sind der Serialisierungseinheit 4.7 in Datenübertragungsrichtung nachgeschaltet. Eine derartige Ausgestaltung, welche den Anschluss mehrerer Lichtwellenleiter 5 an der Verteilereinheit 4 vorsehen, ist insbesondere dann vorteilhaft sein, wenn das Videosystem 1 mehrere Empfangseinheiten 6 aufweist, vgl. Fig. 2. Alternativ zu mehreren Transmittern 4.8 ist es ebenso möglich, dass mehrere Lichtwellenleiter 5 an einen einzelnen Transmitter 4.8 angeschlossen werden.

Im Zusammenhang mit der Übertragung der Videodaten 10 mehrerer Videoquellen 2 als serieller Datenframe 17 ist es ferner denkbar, dass das Videosystem 10 einen in den Figuren nicht dargestellten Kommunikationskanal aufweist. Der Kommunikationskanal kann bei mehreren an die Verteilereinheit 4 angeschlossenen Videoquellen 2 auswählen, welche Videodaten 10 der Videoquellen 2 als serieller Datenframe 17 im Fahrzeug 30 verteilt werden soll. So ist es beispielsweise möglich, dass ein Insasse des Fahrzeugs 30 nur bestimmte Videoquellen 2 auswählt, deren Videodaten 10 über die Anzeigemittel 7 angezeigt werden sollen, so dass die Videodaten 10 der ausgeschlossenen Videoquellen 2 nicht an die Empfangseinheit 6 übertragen werden. Alternativ ist es jedoch ebenfalls denkbar, dass die Videodaten 10 mehrerer Videoquellen 2 ohne Auswahl eines Kommunikationskanals übertragen werden.

Der Lichtwellenleiter 5 ist als Single-Mode-Lichtwellenleiter oder als Multi-Mode-Lichtwellenleiter ausgestaltet. Der Lichtwellenleiter 5 kann den serialisierten Datenframe 17 mit Bandbreiten im Bereich von 10 Gigabit pro Sekunde (Gbps) übertragen. Hierdurch ist der serialisierte Datenframe 17, welcher die Videodaten 10 mehrerer Videoquellen 2 aufweist, latenzarm übertragbar. Die Videodaten 10 werden aufgrund der hohen Bandbreite dabei unkomprimiert übertragen.

Die Verteilereinheit 4 weist einen Oszillator 8 auf. Dieser ermöglicht die Erzeugung eines Referenztaktes. Über den Referenztakt können sich die Verteilereinheit 4 und die Empfangseinheit 3 synchronisieren.

Die Fig. 4 stellt ebenfalls einen Ausschnitt des erfindungsgemäßen Videosystems 1 dar, wobei hierbei insbesondere die Ausgestaltung der Empfangseinheit 6 mit angeschlossenem Anzeigemittel 7 abgebildet ist.

Die Empfangseinheit 6 ist als Leiterkarte ausgestaltet. Es ist möglich, dass sämtliche Bestandteile der Empfangseinheit 6 auf einer einzelnen Leiterkarte angeordnet sind. Alternativ ist es jedoch ebenfalls möglich, die Empfangseinheit 6 als mehrere Bauteile auszugestalten.

Der Lichtwellenleiter 5, welcher gemäß Fig. 3 an dem Transmitter 4.8 der Verteilereinheit 4 angeschlossen ist, ist ebenfalls an einen Receiver 6.1 der Empfangseinheit 6 angeschlossen. Der Receiver 6.1 dient zum Empfangen der Videodaten 10 als serieller Datenframe 17, welche über den gemeinsamen Lichtwellenleiter 5 übertragen werden. Der Receiver 6.1 empfängt dabei das durch den Lichtwellenleiter 5 übertragene optische Signal und stellt dieses in Form eines digitalen Signals 22 zur Verfügung.

Der empfangene serielle Datenframe 17 wird daraufhin von dem Receiver 6.1 aus an eine Parallelisierungseinheit 6.2 übermittelt. Die Parallelisierungseinheit 6.2 ist dem Receiver 6.1 in Datenübertragungsrichtung nachgeschaltet. Die Parallelisierungseinheit 6.2 ermöglicht, den seriellen Datenframe 17 zu parallelisieren, so dass nachfolgend mehrere parallele Datenframes 18, welche jeweils Videodaten 10 von mehreren Videoquellen 2 aufweisen können, bereitgestellt werden. Die parallelen Datenframes 18 können dabei den kodierten parallelen Datenframes 16 entsprechen.

Die Empfangseinheit 6 weist ferner einen Dekodierer 6.3 auf. Der Dekodierer 6.3 ist der Parallelisierungseinheit 6.2 in Datenübertragungsrichtung nachgeschaltet. Der Dekodierer 6.3 empfängt die mehreren parallelen Datenframes 18 von der Parallelisierungseinheit 6.2. Die parallelen Datenframes sind als 8b/10b kodiert und werden im Dekodierer 6.3 entsprechend dekodiert. Der Dekodierer 6.3 führt insofern die zum Kodierer 4.6 der Verteilereinheit 4 gegenteilige Operation aus.

Die dekodierten Datenframes 19 werden anschließend an eine Entschlüsselungseinheit 6.4 übertragen. Die dekodierten Datenframes 19 können dabei den verschlüsselten parallelen Datenframes 15 entsprechen. Die Entschlüsselungseinheit 6.4 ist dem Dekodierer 6.3 nachgeschaltet und ermöglicht das Entschlüsseln der Datenframes 19. Die Entschlüsselungseinheit 6.4 ist hierbei optional, so dass es denkbar ist, dass die Empfangseinheit 6 keine Entschlüsselungseinheit 6.4 aufweist. Insbesondere für den Fall, dass die Verteilereinheit 4 keine Verschlüsselungseinheit 4.5 aufweist, ist die Entschlüsselungseinheit 6.4 nicht erforderlich.

Die Empfangseinheit 6 weist ferner einen Frame-Entpacker 6.5 auf, welcher gemäß Fig. 4 der Entschlüsselungseinheit 6.4 in Datenübertragungsrichtung nachgeschaltet ist. Der Frame-Entpacker 6.3 entpackt die parallelen Datenframes 20, welche die Videodaten 10 mehrerer Videoquellen 2 aufweisen können, derart, dass die Videodaten 10 als separate entpackte Videodaten 21 der Videoquellen 2 weiterverarbeitet werden können. Die entpackten Videodaten 21 können den adaptierten Videodaten 12 und/oder zwischengespeicherten Videodaten 13 entsprechen.

Für den Fall, dass die Empfangseinheit 6 keine Entschlüsselungseinheit 6.4 aufweist, ist es möglich, dass der Frame-Entpacker 6.5 dem Dekodierer 6.3 in Datenübertragungsrichtung nachgeschaltet ist und entsprechend die dekodierten Datenframes 19 von diesem empfängt.

Die separaten entpackten Videodaten 21 werden anschließend von dem Frame-Entpacker 6.5 zu einer Videoverarbeitungseinheit 6.6 übertragen. Die Videoverarbeitungseinheit 6.6 ist dem Frame-Entpacker 6.5 in Datenübertragungsrichtung nachgeschaltet. Die Videoverarbeitungseinheit 6.6 verarbeitet die entpackten Videodaten 21 der Videoquellen 2 durch unterschiedliche Operationen, welche beispielsweise durch einen Benutzer und/oder von Werk aus vorgegeben sind. Zu den Operationen der Videoverarbeitungseinheit 6.6 zählt das Zusammensetzen, das Farbkonvertieren, das Skalieren und/oder das Zuschneiden der Videodaten 10. Es ist ebenfalls möglich, dass die Videoverarbeitungseinheit 6.6 die Videodaten 10 mehrere Videoquellen 2 überlagert.

Die von der Videoverarbeitungseinheit 6.6 verarbeiteten, unkomprimierten Videodaten 10 werden von der Empfangseinheit 6 an das Anzeigemittel 7 übertragen, insbesondere per elektrischer Datenverbindung. Die Videoverarbeitungseinheit 6.6 ist hierfür mit dem Anzeigemittel 7 verbunden. Die Verbindung kann hierbei über eine standardisierte Schnittstelle, wie beispielsweise eine SDI-, DVI-, CoaxPress- und/oder eine FBAS-Schnittstelle, erfolgen.

Das Anzeigemittel 7 ist als Display ausgestaltet. Alternativ ist es jedoch ebenso möglich, andere Anzeigemittel, wie beispielsweise Signalmittel, etc., vorzusehen. Ferner ist es denkbar, dass an die Empfangseinheit 6 mehrere Anzeigemittel 7 angeschlossen sind. Die Videoverarbeitungseinheit 6.6 ist in diesem Fall mit mehreren Anzeigemittel 7 verbunden. Die Anzeigemittel 7 sind der Empfangseinheit 6 in Datenübertragungsrichtung nachgeschaltet.

Die Empfangseinheit 3 weist einen Oszillator 9 auf. Dieser ermöglicht die Erzeugung eines Referenzstaktes. Über den Referenztakt können sich die Verteilereinheit 4 und die Empfangseinheit 3 synchronisieren.

Anhand der Fig. 5a und 5b soll nun nachfolgend der Aufbau der parallelen Datenframes 14 sowie des seriellen Datenframes 17 beschrieben werden. In Fig. 5a sind drei parallele Datenframes 14 dargestellt. Jeder Datenframe 14 ist dabei 64 Bits lang. Die Videodaten 10 mehrere Videoquellen 2 nehmen dabei jeweils 16 Bit ein. Zusätzlich wird noch jeweils ein Bit für das Startsignal SOF und das Endsignal EOL belegt wird. Insofern weist jeder der parallelen Datenframes 14 jeweils Videodaten 10 von bis zu drei Videoquellen 2 auf. Es ist möglich, dass die Videodaten 10 hierbei auch lediglich von zwei oder einer Videoquelle 2 stammen. Zur späteren Zuordnung der Videodaten 10 zu der jeweiligen Videoquelle 2, insbesondere im Falle von mehr als drei Videoquellen 2, weist die Adaptionseinheit 4.2 dem Datenframe 14 eine Kodierung FS zu. So werden bspw. drei unterschiedliche Videoquellen 2 in einem Datenframe 14 mit der Kodierung FS 0000 gepackt, drei weitere Videoquellen 2 in einen Datenframe 14 mit der Kodierung FS 0001, usw. Durch dieses Verfahren lässt sich das Videosystem 1 auf einfache Art und Weise um beliebig viele Videoquellen 2 erweitern.

In Fig. 5b ist der serielle Datenframe 17 dargestellt. Der serielle Datenframe 17 weist dabei mehrere, in dem Ausführungsbeispiel 3, parallele Datenframes 14 auf. Die parallelen Datenframes 14 werden in der Serialisierungseinheit 4.7 entsprechend zu dem seriellen Datenframe 17 serialisiert.

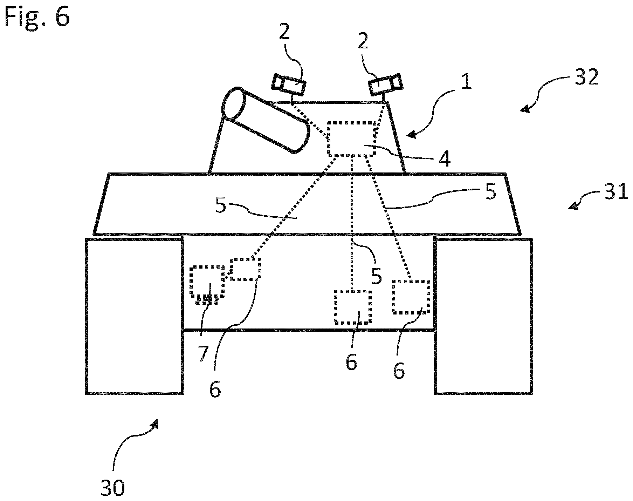

In der Fig. 6 ist ein erfindungsgemäßes Fahrzeug 30 mit einem Videosystem 1 zur Verteilung von Videodaten 10 schematisch dargestellt. Das Videosystem 1 ist gemäß vorstehend beschriebener Ausführungsbeispiel gemäß der

Fig. 2, 3 und 4 ausgestaltet.

Das Fahrzeug 30 ist als Panzer ausgestaltet. Das Fahrzeug 30 weist einen als Panzerwanne ausgestalteten unteren Fahrzeugteil 31 auf. Auf dem unteren Fahrzeugteil 31 ist ein als Waffenturm ausgestalteter oberer Fahrzeugteil
32 drehbar angeordnet. Der obere Fahrzeugteil 32 ist gegenüber dem unteren Fahrzeugteil 31 drehbar, so dass beispielsweise die Waffe des Fahrzeugs
30 gerichtet werden kann.

Das Videosystem 1 weist mehrere Videoquellen 2 auf, wovon lediglich zwei in der Fig. 6 dargestellt sind. Je nach Ausführung ist es denkbar, dass das Videosystem 1 auch eine beliebige Anzahl an Videoquellen 2 aufweist. Die als Kameras ausgestalteten Videoquellen 2 sind bei demf Ausführungsbeispiel der Fig. 6 außerhalb am Fahrzeug 30 angeordnet. Beim Drehen des unteren Teils 31 gegenüber dem oberen Fahrzeugteil 32 des Fahrzeugs 30 werden die Videoquellen 2 entsprechend mitgedreht. Ferner ist es möglich, dass die Videoquellen 2 jeweils separat sichtbar sind.

Die Videoquellen 2 sind jeweils mit einer Verteilereinheit 4 des Videosystems 2 verbunden. Die Verteilereinheit 4 ist dabei in dem oberen Fahrzeugteil 32 des Fahrzeugs 30 angeordnet. Die Verteilereinheit 4 ist gemäß Fig. 3 ausgestaltet, wobei diese alternativ auch eine abweichende Anzahl an Receivern 4.1, Adaptionseinheiten 4.2 und Speichern 4.3 aufweisen kann. Es ist vorteilhaft, wenn die Anzahl an Videoquellen 2 der Anzahl an Receivern 4.1, Adaptionseinheiten 4.2 und Speichern 4.3 entspricht.

Die von der Verteilereinheit 4 empfangenen Videodaten 10 der Videoquellen 2 sind von der Verteilereinheit 4 gemäß dem vorstehend beschriebenen Verfahren über jeweils einen gemeinsamen Lichtwellenleiter 5 als serieller Datenframe 17 übertragbar. Das Videosystem 1 weist insgesamt drei Empfangseinheiten 6 auf, welche jeweils über einen Lichtwellenleiter 5 mit der Verteilereinheit 4 verbunden sind. An den Empfangseinheiten 6 können Anzeigemittel 7 angeschlossen sein. Aus Gründen der Übersichtlichkeit ist in Fig. 6 lediglich ein an eine Empfangseinheit 6 angeschlossenes Anzeigemittel 7 dargestellt.

Die Empfangseinheiten 6 sind in dem unteren Fahrzeugteil 31 des Fahrzeugs 30 an unterschiedlichen Positionen angeordnet. Durch die Anordnung an unterschiedlichen Positionen im Fahrzeug 30 ist es möglich, die von der Verteilereinheit 4 empfangenen Videodaten 10 der Videoquellen 2 zu unterschiedlichen Fahrzeuginsassen, insbesondere unterschiedlichen Besatzungsmitgliedern, zu verteilen und über Anzeigemittel 7 anzuzeigen. So ist es beispielsweise bei dem Panzer 30 möglich, dass ein Anzeigemittel 7 die Videodaten 10 einem Schützen und eine weiteres Anzeigemittel 7 die Videodaten 10 einem Fahrer darstellen. Durch die latenzarme Übertragung der unkomprimierten Videodaten 10, so dass diese im Wesentlichen unverzögert an die Empfangseinheiten 6 übertragbar und auf den Anzeigemitteln 7 darstellbar sind, ermöglicht, dass auf Grundlage der übertragenen Videodaten 10 unterschiedlichste Aufgaben im Einsatz, wie beispielsweise das Richten einer Waffe, das Umfahren von Hindernissen, etc., ausführbar sind.

Wie vorstehend bereits erläutert, ist die Verteilereinheit 4 in dem gegenüber dem unteren Fahrzeugteil 31 drehbaren oberen Fahrzeugteil 32 des Fahrzeugs 30 angeordnet. Die Empfangseinheiten 6 sind dagegen in dem unteren Fahrzeugteil 31 angeordnet. Die mit der Empfangseinheit 6 und der Verteilereinheit 4 verbundenen Lichtwellenleiter 5 sind entsprechend von dem oberen Fahrzeugteil 32 aus hin zu dem unteren Fahrzeugteil 31 verlegt. Aufgrund der weniger komplexen Verkabelung des erfindungsgemäßen Videosystems 1 gegenüber dem Videosystem VS des Stands der Technik, vgl. Fig. 1, ist hier jedoch lediglich ein Lichtwellenleiter 5 pro Empfangseinheit 6 zu verbinden.

In Fig. 7 ist ein weiteres Ausführungsbeispiel eines Videosystems 1 dargestellt. Sämtliche zuvor genannten Vorteile gelten auch für das Videosystem gemäß Fig. 7, so dass nachfolgend vornehmlich auf die Unterschiede des Ausführungsbeispiels eingegangen werden wird.

Das Videosystem 1 der Fig. 7 weist eine Verteilerbox 3 auf.

Die Verteilerbox 3 weist eine Verteilereinheit 4 und mehrere Empfangseinheiten 6 auf. Die Verteilereinheit 4 ist als Leiterkarte ausgestaltet. Der Aufbau der Verteilereinheit 4 wurde auch bereits im Zusammenhang mit

Fig. 3 beschrieben.

An der Verteilereinheit 4 lassen sich über Anschlüsse 3.1 mehrere Videoquellen 2 anschließen, insbesondere durch militärische Stecker. Die Anschlüsse 3.1 sind als SDI-, FBAS-, DVI- und PAL-Anschlüsse ausgestaltet. Hierdurch lassen sich unkomprimierte Videodaten 10 von den Videoquellen 2 an die Verteilereinheit 4 übertragen, insbesondere per elektrischer Kabelverbindung.

Die Verteilereinheit 4 ist über vier Lichtwellenleiter 5 mit jeweils einer Empfangseinheit 6 verbunden. Die Lichtwellenleiter 5 sind dabei jeweils kürzer als 1m, bevorzugt kürzer als 50cm und besonders bevorzugt kürzer als 30 cm lang ausgestaltet.

Die Empfangseinheiten 6 sind als Leiterkarten ausgestaltet. Der Aufbau einer Empfangseinheit 6 wurde bereits im Zusammenhang mit Fig. 4 beschrieben.

An die Empfangseinheiten 6 lässt sich über jeweils mindestens einen Anschluss 3.2 ein Anzeigemittel 7 anschließen, insbesondere per elektrischer

Kabelverbindung. Es ist denkbar, dass mehrere Anzeigemittel 7 an eine Empfangseinheit 6 über mehrere Anschlüsse 3.2 anschließbar sind. Die Anschlüsse 3.2 sind als DVI-Ausgänge ausgestaltet. Andere Ausgänge, wie ein SDI-, FBAS- oder PAL-Ausgänge sind ebenso denkbar. Die Anzeigemittel 7 sind als Monitore zum Anzeigen der Videodaten 10 ausgestaltet.

Die Empfangseinheiten 6 sind jeweils mit einen Grafikanschluss 3.3 verbunden. An die Grafikanschlüsse 3.3 ist eine Grafikkarte 33 eines externen Rechners anschließbar. Die Grafikanschlüsse 3.3 sind als DVI-Eingänge ausgestaltet, es sind jedoch ebenso PAL-, SDI- oder FBAS-Eingänge denkbar. Die Grafikkarte 33 ermöglicht eine, insbesondere teilweise, Überlagerung der Videodaten 10 mit einer grafischen Oberfläche. Hierdurch ist es bspw. möglich, neben den Videodaten 10 weitere grafische Elemente über die Anzeigemittel 7 darzustellen.

Die Verteilerbox 3 weist ein Gehäuse 3.4 auf. Das Gehäuse 3.4 ist kastenförmig ausgestaltet. Im Gehäuse 3.4 ist die Verteilereinheit 4, die Lichtwellenleiter 5 und die Empfangseinheiten 6 angeordnet. Die Anschlüsse 3.1, 3.2 und 3.3 sind von außerhalb des Gehäuses 3.4 zugänglich, so dass die Videoquellen 2, die Anzeigemittel 7 und die Grafikkarten 33 entsprechend anschließbar sind, insbesondere per elektrischer Datenverbindung.

Durch die Verteilerbox 3 kann auf einfache Art und Weise ein erfindungsgemäßes Videosystem 1 realisiert werden. Hierfür müssen lediglich Videoquellen 2 und mindestens ein Anzeigemittel 7 an die Verteilerbox 3 angeschlossen werden. Die Verteilerbox 3 ist insoweit als "Plug-and-Play"- Einheit ausgestaltet.

Zusammenfassend ermöglicht das erfindungsgemäße Videosystem 1 die Verteilung von unkomprimierten Videodaten 10 in einem Fahrzeug 30, insbesondere einem militärischen Fahrzeug 30, wie in Fig. 6 dargestellt. Die mehreren Videoquellen 2 stellen dabei unterschiedliche Videodaten 10 bereit, welche im innerhalb des Fahrzeugs 30 über die Empfangseinheiten 6 empfangen werden können. Um die Videodaten 10 entsprechend von den Videoquellen 2 zu der Empfangseinheit 6 verteilen zu können, sind die Videoquellen 2 über die Verteilereinheit 4 mit der Empfangseinheit 6 verbunden. Zwischen der Verteilereinheit 4 und der Empfangseinheit 6 ist zur Übertragung der Videodaten 10 der Lichtwellenleiter 5, beispielsweise in Form eines Glasfaserkabels oder als Glastubus, vorgesehen, so dass die Videodaten 10 ausgehend von der Verteilereinheit 4 als serieller Datenframe latenzarm übertragbar sind. Eine Komprimierung der Videodaten 10, welche zwangsläufig zu Latenzen führen würde, wird aufgrund der zur Verfügung gestellten hohen Bandbreite des Lichtwellenleiters 5 vermieden. Durch das erfindungsgemäße Videosystem 1 entfällt eine aufwendige Verkabelung durch Verbindungsleitungen, was bei Fahrzeugen 30 wie vorstehend erörtert vorteilhaft sein kann. Das Videosystem 1 kann über eine erfindungsgemäße Verteilerbox 3 auf einfache Art und Weise realisiert werden. Hierfür müssen lediglich Videoquellen 2 sowie mindestens ein Anzeigemittel 7 an die Verteilerbox 3 angeschlossen werden.

**Bezugszeichen:**
- 1: Videosystem
- 2: Videoquellen
- 3: Verteilerbox
- 3.1: Anschluss
- 3.2: Anschluss
- 3.3: Grafikanschluss
- 3.4: Gehäuse
- 4: Verteilereinheit
- 4.1: Receiver
- 4.2: Adaptionseinheit
- 4.3: Speicher
- 4.4: Frame-Packer
- 4.5: Verschlüsselungseinheit
- 4.6: Kodierer
- 4.7: Serialisierungseinheit
- 4.8: Transmitter
- 5: Lichtwellenleiter
- 6: Empfangseinheit
- 6.1: Receiver
- 6.2: Parallelisierungseinheit
- 6.3: Dekodierer
- 6.4: Entschlüsselungseinheit
- 6.5: Frame-Entpacker
- 6.6: Videoverarbeitungseinheit
- 7: Anzeigemittel
- 8: Oszillator
- 9: Oszillator

- 10: Videodaten
- 11: digitales Signal
- 12: adaptierte Videodaten
- 13: zwischengespeicherte Videodaten
- 14: paralleler Datenframe
- 15: verschlüsselter paralleler Datenframe
- 16: kodierter paralleler Datenframe
- 17: serieller Datenframe
- 18: paralleler Datenframe
- 19: dekodierter paralleler Datenframe
- 20: entschlüsselter paralleler Datenframe
- 21: entpackte Videodaten
- 22: digitales Signal

- 30: Fahrzeug
- 31: unterer Fahrzeugteil
- 32: oberer Fahrzeugteil
- 33: Grafikkarte

- SOF: Startsignal
- EOL: Endsignal
- FS: Kodierung
- VK: Verbindungskabel
- VS: Videosystem
- FZ: Fahrzeug

## Patentansprüche

1. Videosystem zur Verteilung von unkomprimierten Videodaten (10) in einem Fahrzeug (30), insbesondere einem militärischen Fahrzeug, mit mehreren Videoquellen (2) zur Bereitstellung der Videodaten (10) und mit mindestens einer Empfangseinheit (6) zum Empfangen und Verarbeiten der Videodaten (10) innerhalb des Fahrzeugs (30), wobei die Videoquellen (2) über eine Verteilereinheit (4) mit der mindestens einen Empfangseinheit (6) verbunden sind,
**dadurch gekennzeichnet,**
**dass** die unkomprimierten Videodaten (10) der mehreren Videoquellen (2) von der Verteilereinheit (4) aus zu der mindestens einen Empfangseinheit (6) über einen gemeinsamen Lichtwellenleiter (5) als serieller Datenframe (17) übertragbar sind.

2. Videosystem nach Anspruch 1, **dadurch gekennzeichnet, dass** die Verteilereinheit (4) eine Serialisierungseinheit (4.7) zum Serialisieren der Videodaten (10) der mehreren Videoquellen (2) zu einem seriellen Datenframe (17) aufweist.

3. Videosystem nach einem der Ansprüche 1 oder 2, **dadurch gekennzeichnet, dass** die Verteilereinheit (4) als Leiterkarte ausgestaltet ist.

4. Videosystem nach einem der vorhergehenden Ansprüche, **dadurch gekennzeichnet, dass** die Verteilereinheit (4) mehrere Adaptionseinheiten (4.2) zur Konvertierung der Videodaten (10) der mehreren Videoquellen (2) in einen einheitlichen Farbraum aufweist.

5. Videosystem nach einem der Ansprüche 2 bis 4, **dadurch gekennzeichnet, dass** die Verteilereinheit (4) einen Frame-Packer (4.4) zum Packen der Videodaten (10) in mehrere parallele Datenframes (14) aufweist, wobei die parallelen Datenframes (14) in der dem Frame-Packer (4.4) in Datenübertragungsrichtung nachgeschalteten Serialisierungseinheit (4.7) zu einem seriellen Datenframe (17) serialisierbar sind.

6. Videosystem nach einem der vorhergehenden Ansprüche, **dadurch gekennzeichnet, dass** die Verteilereinheit (4) eine Verschlüsselungseinheit (4.5) zur Verschlüsselung der Videodaten (10) der mehreren Videoquellen (2) aufweist.

7. Videosystem nach einem der vorhergehenden Ansprüche, **dadurch gekennzeichnet, dass** mindestens eine Videoquelle (2) als Kamera ausgestaltet ist.

8. Videosystem nach einem der vorhergehenden Ansprüche, **dadurch gekennzeichnet, dass** der Lichtwellenleiter (5) als Single-Mode-Lichtwellenleiter oder als Multi-Mode-Lichtwellenleiter ausgestaltet ist.

9. Videosystem nach einem der vorhergehenden Ansprüche, **dadurch gekennzeichnet, dass** der Lichtwellenleiter (5) als Glastubus eines Periskops zur Übertragung des seriellen Datenframes (17) ausgestaltet ist.

10. Videosystem nach einem der vorhergehenden Ansprüche, **dadurch gekennzeichnet, dass** an die Empfangseinheit (6) ein Anzeigemittel (7) zur Anzeige der Videodaten (10) innerhalb des Fahrzeugs (30) angeschlossen ist.

11. Videosystem nach einem der vorhergehenden Ansprüche, **dadurch gekennzeichnet, dass** die Empfangseinheit (6) als Leiterkarte ausgestaltet ist.

12. Videosystem nach einem der vorhergehenden Ansprüche, **dadurch gekennzeichnet, dass** der serielle Datenframe (17) in der Empfangseinheit (6) in die Videodaten (10) der mehreren Videoquellen (2) entpackbar ist.

13. Videosystem nach einem der vorhergehenden Ansprüche, **dadurch gekennzeichnet, dass** die Empfangseinheit (6) eine Entschlüsselungseinheit (6.4) zum Entschlüsseln der Videodaten (10) der mehreren Videoquellen (2) aufweist.

14. Videosystem nach einem der vorhergehenden Ansprüche, **gekennzeichnet durch** mehrere Empfangseinheiten (6), welche mit der Verteilereinheit (4) über jeweils einen Lichtwellenleiter (5) zur Übertragung der Videodaten (10) als serieller Datenframe (17) verbunden sind.

15. Videosystem nach einem der vorhergehenden Ansprüche, **dadurch gekennzeichnet, dass** die Verteilereinheit (4), der oder die Lichtwellenleiter (5) und die eine oder mehrere Empfangseinheiten (6) als Teil einer Verteilerbox (3) ausgestaltet sind.

16. Verteilerbox zum Verteilen von unkomprimierten Videodaten (10), insbesondere zur Anwendung in einem Videosystem (1) nach einem der vorhergehenden Ansprüche, mit einer Verteilereinheit (4), welche mehrere Anschlüsse (3.1) zum Anschluss von die unkomprimierten Videodaten (10) erzeugenden Videoquellen (2) aufweist, und mit mindestens einer mit der Verteilereinheit (4) verbundenen Empfangseinheit (6), wobei die Verteilereinheit (4) und die Empfangseinheit (6) in einem Gehäuse (3.4) angeordnet sind,
**dadurch gekennzeichnet,**
**dass** die unkomprimierten Videodaten (10) von der Verteilereinheit (4) aus zu der mindestens einen Empfangseinheit (6) über einen gemeinsamen Lichtwellenleiter (5) als serieller Datenframe (17) übertragbar sind.

17. Fahrzeug, insbesondere militärisches Fahrzeug, mit einem Videosystem (1) zur Verteilung von unkomprimierten Videodaten (10) in dem Fahrzeug (30),
**dadurch gekennzeichnet,**
**dass** das Videosystem (1) nach einem der vorhergehenden Ansprüche 1 bis 15 ausgestaltet ist.

18. Verfahren zur Verteilung von unkomprimierten Videodaten (10) in einem Fahrzeug (30), insbesondere einem militärischen Fahrzeug, wobei mehrere Videoquellen (2) Videodaten (10) bereitstellen und die Videodaten (10) von mindestens einer Empfangseinheit (6) empfangen werden, wobei die Videoquellen (2) über eine Verteilereinheit (4) mit der mindestens einen Empfangseinheit (6) verbunden sind,
**dadurch gekennzeichnet,**
**dass** die unkomprimierten Videodaten (10) der mehreren Videoquellen (2) von der Verteilereinheit (4) aus zu der mindestens einen Empfangseinheit (6) über einen Lichtwellenleiter (5) als serieller Datenframe (17) gemeinsam übertragen werden.
